(19) Europäisches Patentamt
European Patent Office
Office européen des brevets

(11) **EP 3 239 593 B1**

(12) **EUROPÄISCHE PATENTSCHRIFT**

(45) Veröffentlichungstag und Bekanntmachung des Hinweises auf die Patenterteilung:
**22.12.2021  Patentblatt 2021/51**

(51) Int Cl.:
***F21S 41/20*** *(2018.01)*   ***F21S 43/40*** *(2018.01)*
***F21S 43/20*** *(2018.01)*

(21) Anmeldenummer: **16166879.3**

(22) Anmeldetag: **25.04.2016**

(54) **KRAFTFAHRZEUGBELEUCHTUNGSVORRICHTUNG**

VEHICULAR ILLUMINATION DEVICE

DISPOSITIF D'ECLAIRAGE DE VEHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.11.2017  Patentblatt 2017/44**

(73) Patentinhaber: **ZKW Group GmbH**
**3250 Wieselburg (AT)**

(72) Erfinder:
• **MOSER, Martin**
  **3033 Altlengbach (AT)**

• **ECKER-ENDL, Markus**
  **3500 Krems an der Donau (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**DE-A1- 3 005 883     DE-A1- 3 208 741**
**DE-A1-102010 027 322     US-A- 3 379 869**

**Beschreibung**

Die Erfindung betrifft eine Kraftfahrzeugbeleuchtungsvorrichtung für einen Kraftfahrzeugscheinwerfer umfassend zumindest eine Lichtquelle, ein der zumindest einen Lichtquelle zugeordnetes optisches Lichtabbildungssystem, welches dazu eingerichtet ist, das von der zumindest einen Lichtquelle erzeugtes Licht in Form einer Lichtverteilung, beispielsweise einer Signallicht-Lichtverteilung oder einer Positionslicht-Lichtverteilung, vor die Kraftfahrzeugbeleuchtungsvorrichtung abzubilden, und eine optische Struktur, die dazu eingerichtet ist, die Lichtverteilung zu einer modifizierten Lichtverteilung, insbesondere zu einer modifizierten Signallicht-Lichtverteilung, zu modifizieren, und eine Mehrzahl optischer lichtstreuender Strukturelemente aufweist, wobei jedes Strukturelement eine Erhebung aufweist, welche Erhebung das von der zumindest einen Lichtquelle erzeugte und auf die Erhebung mithilfe des zumindest einen Lichtabbildungssystems gelenkte Licht, in zumindest einer Raumebene in zumindest eine Richtung umlenkt, wobei die optische Struktur dem optischen Lichtabbildungssystem in die Hauptabstrahlrichtung nachgeordnet oder ein Teil des optischen Lichtabbildungssystems ist, die Erhebung konvex ausgebildet ist, zumindest eine gekrümmte Fläche und eine der gekrümmten Fläche gegenüberliegende im Wesentlichen plane Fläche aufweist, welche gekrümmte Fläche dem von der zumindest einen Lichtquelle erzeugten und auf das Strukturelement mithilfe des zumindest einen Lichtabbildungssystems gelenkten Licht zugewandt ist, und die zumindest eine Raumebene eine Horizontalebene ist, und die modifizierte Lichtverteilung in der Horizontalebene aufgeweitet ist.

Außerdem betrifft die Erfindung einen Kraftfahrzeugscheinwerfer mit zumindest einer solchen Kraftfahrzeugbeleuchtungsvorrichtung.

Darüber hinaus betrifft die Erfindung ein Kraftfahrzeug mit zumindest einem solchen Kraftfahrzeugscheinwerfer.

Kraftfahrzeugbeleuchtungsvorrichtungen mit optischen Strukturen sind im KFZ-Bau bekannt. Sie können beispielsweise einer Aufweichung der Hell-Dunkel-Grenze dienen. Darüber hinaus offenbart der Stand der Technik optische Strukturen in unterschiedlichen Formen. Dabei können die optischen Strukturen aus einer Mehrzahl einzelner Strukturelemente bestehen und an einer Oberfläche eines Kraftfahrzeugscheinwerferelements, beispielsweise einer Linse, eines Reflektors, einer Abschlussscheibe usw. angeordnet sein. Alternativ können solche optischen Strukturen durch spezielle Verarbeitung der Oberfläche eines Kraftfahrzeugscheinwerferelements, beispielsweise durch Aufrauhung durch Sandstrahlen, angebracht werden.

In den internationalen Anmeldungen WO 2015031924 A1 und WO 2015031925 A1 der Anmelderin ist eine optische aus einer Mehrzahl von Strukturelementen bestehende Struktur gezeigt, die z.B. zu gleichzeitiger Lösung zwei Probleme - scharfer Hell-Dunkel-Grenze und Erzeugung von "Signlight" - herangezogen werden kann. Dabei weisen die Strukturelemente eine ganz spezifische Form auf, die erlaubt, das auf ein einzelnes Strukturelement einfallende Lichtbündel (Strahlenbündel) in zwei oder mehr nicht überlappende Lichtbündeln aufzuspalten. Dabei ist die zur Realisierung des Signlights notwendige Lichtmenge des gestreuten Lichts viel kleiner als die Menge des zur Aufweichung der Hell-Dunkel-Grenze benötigten Lichts.

Alternativ offenbart die Anmeldung DE 102008023551 A1 eine ebenfalls aus einer Mehrzahl von Strukturelementen bestehende optische Struktur an einer Linse eines Kraftfahrzeugscheinwerfers, die der Aufweichung der Hell-Dunkel-Grenze dient. Dabei werden die einzelnen Strukturelemente gemäß einer sich wiederholenden mathematischen, zumindest C0-stetigen Grundfunktion, beispielsweise einer potenzierten Kosinusfunktion, erzeugt, die die Erhebung bzw. Vertiefung jedes einzelnen Strukturelements beschreibt.

Ferner offenbart die DE 32 08 741 A1, die DE 10 2010 027322 A1, die DE 30 05 883 A1 und die US 3 379 869 A Kraftfahrzeugbeleuchtungsvorrichtungen aus dem Stand der Technik.

Im oben beschriebenen Stand der Technik werden Probleme der Hauptbeleuchtung (hauptsächlich Abblendlicht- und Fernlichtfunktionen) eines Fahrzeugs behandelt. Dabei ist stets auf die gesetzlich vorgeschriebenen Normen abzustellen, welche vorschreiben wieviel Licht in welche Richtungen gestreut werden darf. Deshalb sind die oben beschriebenen optischen Strukturen (Strukturelemente) derart ausgebildet, dass das Licht nur unter relativ kleinen Winkeln, und im Wesentlichen in einer vertikalen Ebene, bezüglich der Hauptabstrahlrichtung des Kraftfahrzeugscheinwerfers gestreut wird. Andernfalls wären die mit breit streuenden optischen Strukturen ausgestatteten Kraftfahrzeugbeleuchtungsvorrichtungen wegen strikter gesetzlicher die Hauptlichtfunktionen eines Kraftfahrzeugscheinwerfers betreffender Normen nicht zugelassen.

Darüber hinaus, spielt in der Entwicklung von Hauptscheinwerfern das Design eine immer stärkere Rolle. Diese Designs stehen aber immer wieder im Konflikt mit den gesetzlichen Anforderungen an die Lichtfunktionen. Besonders im Bereich der Signallichtfunktionen wird es immer schwieriger, die bei bspw. Fahrtrichtungsanzeigern und Positionslicht geforderten großen Winkelbereiche von bis zu 160° auszuleuchten.

Um große Winkelbereiche auszuleuchten können, wie in der Anmeldung DE 102010 027415 A1 - Paragraph (siehe insbesondere [0046]) Rillen oder ähnliche Strukturen auf der Abschlussscheibe vorgesehen sein. Solche Strukturen sind allerdings nicht erwünscht, da sie nicht zum Beispiel mit dem Design, auf Grund der deutlichen Sichtbarkeit, vereinbar sind.

Darüber hinaus verursachen zusätzliche optische Elemente vor den Reflektoren (siehe z.B. US4912606A - Fig. 4A) unentwegt hohe Kosten.

Außerdem streuen die in der Anmeldung DE 102011 050423 A1 (siehe [0019]) vorgesehenen Narbungen das Licht in alle Richtungen entsprechend einer Gaußverteilung. Dadurch wird das Licht auch in Winkelbereiche gestreut, in denen die gesetzlichen Lichtwerte bereits erfüllt sind. Dies kann die gesetzlichen Werte beeinträchtigen. Dementsprechend muss ein verhältnismäßig großer Bereich von der entsprechenden Lichtfunktion genarbt werden.

Die Aufgabe der vorliegenden Erfindung ist es deshalb eine Kraftfahrzeugbeleuchtungsvorrichtung für einen Kraftfahrzeugscheinwerfer eines Kraftfahrzeugs zu schaffen, die die oben beschriebenen Nachteile der Kraftfahrzeugbeleuchtungsvorrichtungen nach dem Stand der Technik überwindet und eine optische Struktur aufweist, welche trotz einer geringen Größe der Strukturelemente eine gerichtete Lichtumlenkung zumindest in einer horizontalen Ebene in einem großen Winkelbereich und Realisierung des Signlights ermöglicht.

Diese Aufgabe wird mit einer eingangs erwähnten Kraftfahrzeugbeleuchtungsvorrichtung erfindungsgemäß dadurch gelöst, dass die Strukturelemente derart angeordnet und/oder ausgebildet sind, dass das auf die Strukturelemente einfallende Licht in einer weiteren, vertikal angeordneten Raumebene in alle Richtungen in einem Winkelbereich von 0° bis 45° nach oben von der Hauptabstrahlrichtung der Kraftfahrzeugbeleuchtungsvorrichtung streut und die modifizierte Lichtverteilung in der vertikalen Raumebene aufgeweitet ist.

Dabei beziehen sich die Begriffe "horizontal" und "vertikal" auf einen in ein Fahrzeug eingebauten Scheinwerfer.

Hinsichtlich einer gezielten Ablenkung des Lichts, kann es zweckmäßig sein, wenn die gekrümmte Fläche ellipsoidflächenförmig ausgebildet ist.

Hinsichtlich des Herstellungsverfahrens kann es vorteilhaft sein, wenn die Erhebung konvex polyederförmig ausgebildet ist.

Um eine gezielte Lichtbündelausdehnung eines auf jedes Strukturelement einfallenden Lichtbündels zu erzielen kann es zweckdienlich sein, wenn die Erhebung konvex tetraederförmig ausgebildet ist und genau eine gekrümmte Fläche aufweist.

Um Ablenkung von auf Strukturelemente einfallender Lichtstrahlen hinsichtlich unterschiedlicher Raumebenen zu beeinflussen, kann es vorteilhaft sein, wenn die Erhebung konvex hexaederförmig, insbesondere würfelförmig, ausgebildet ist und genau eine gekrümmte Fläche aufweist.

Ein Strukturelement, welches eine hexaederförmig ausgebildete Erhebung aufweist, wobei die Erhebung genau eine gekrümmte (gegen die Hauptabstrahlrichtung der Kraftfahrzeugbeleuchtungsvorrichtung gewölbte) ellipsoidflächenförmige Fläche umfasst, bringt den Vorteil, dass die Krümmung der gekrümmten Fläche unterschiedliche Werte je nach Raumrichtung annehmen kann. So ist es denkbar, dass die gekrümmte Fläche als Teil eines Zylinders (eine Zylindermantelfläche) ausgebildet ist und dergestalt angeordnet ist, dass die Krümmung in vertikaler Richtung verschwindend klein ist (die Zylinderachse verläuft vertikal). In diesem Fall kann die Ablenkung des Lichts in vertikaler Richtung vermieden werden.

Weiterhin kann es z.B. hinsichtlich Verwirklichung einer besseren Signallicht-Funktion vorteilhaft sein, wenn die Erhebung ellipsoidsegmentförmig ausgebildet ist.

Darüber hinaus kann es zweckmäßig sein, wenn die Erhebung als eine abgeschnittene ellipsoidsegmentförmige Erhebung ausgebildet ist, wobei die Schnittebene hinsichtlich der planen Fläche geneigt ist.

Hinsichtlich der Erfüllung der gesetzlichen Vorschriften und Normen (beispielsweise ECE, SAE, CCC) kann es vorteilhaft sein, wenn die gekrümmte Fläche der Strukturelemente derart ausgebildet ist, dass jedes Strukturelement das Licht bei einer in ein Kraftfahrzeug eingebauten Kraftfahrzeugbeleuchtungsvorrichtung in alle Richtungen in einem Winkelbereich von 0° bis 80° (z.B. bei Motorrädern), insbesondere von 0° bis 45°, fahrzeuginnenseitig und von 0° bis 80° fahrzeugaußenseitig von der Hauptabstrahlrichtung der Kraftfahrzeugbeleuchtungsvorrichtung streut.

Die verwendeten Begriffe "fahrzeuginnenseitig" und "fahrzeugaußenseitig" beziehen sich im Zusammenhang mit der vorliegenden Erfindung auf einen eingebauten Zustand der Kraftfahrzeugbeleuchtungsvorrichtung in ein Kraftfahrzeug.

In dem Fall, wenn die optische Struktur Strukturelemente mit unterschiedlichen Streueigenschaften aufweist, kann es hinsichtlich der Erfüllung der gesetzlichen Vorschriften und Normen (beispielsweise ECE, SAE, CCC) vorteilhaft sein, wenn zumindest ein Teil der Strukturelemente derart angeordnet und/oder ausgebildet ist, dass jedes Strukturelement des zumindest einen Teils das auf dieses Strukturelement einfallende Licht in alle Richtungen in einem Winkelbereich von 0° bis 80° rechts oder links von der Hauptabstrahlrichtung der Kraftfahrzeugbeleuchtungsvorrichtung, vorzugsweise von einer Kraftfahrzeuglängsachse, streut, und zumindest ein weiterer Teil der Strukturelemente derart angeordnet und/oder ausgebildet ist, dass jedes Strukturelement des zumindest einen weiteren Teils das auf dieses Strukturelement einfallende Licht in alle Richtungen in einem Winkelbereich von 0° bis 80° (z.B. bei Motorrädern), insbesondere von 0° bis 45°, links oder rechts von der Hauptabstrahlrichtung der Kraftfahrzeugbeleuchtungsvorrichtung streut.

Hinsichtlich der Möglichkeit, andere Lichtfunktionen mit der erfindungsgemäßen Kraftfahrzeugbeleuchtungsvorrichtung zu realisieren, kann es vorteilhaft sein, wenn die Strukturelemente derart angeordnet und/oder ausgebildet sind, dass das auf die Strukturelemente einfallende Licht in einer vertikalen Raumebene in alle Richtungen in einem Winkelbereich von 0° bis 15° nach oben von der Hauptabstrahlrichtung der Kraftfahrzeugbeleuchtungsvorrichtung streut.

Die verwendeten Begriffe "nach oben" und "nach unten" beziehen sich im Zusammenhang mit der vorliegenden Erfindung auf einen eingebauten Zustand der Kraftfahrzeugbeleuchtungsvorrichtung in ein Kraftfahrzeug.

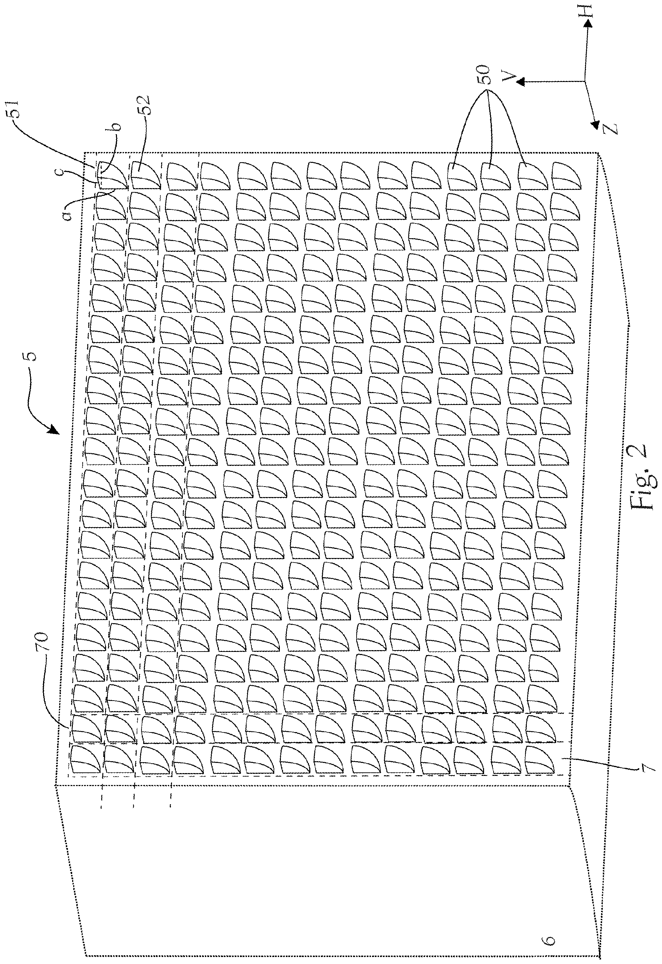

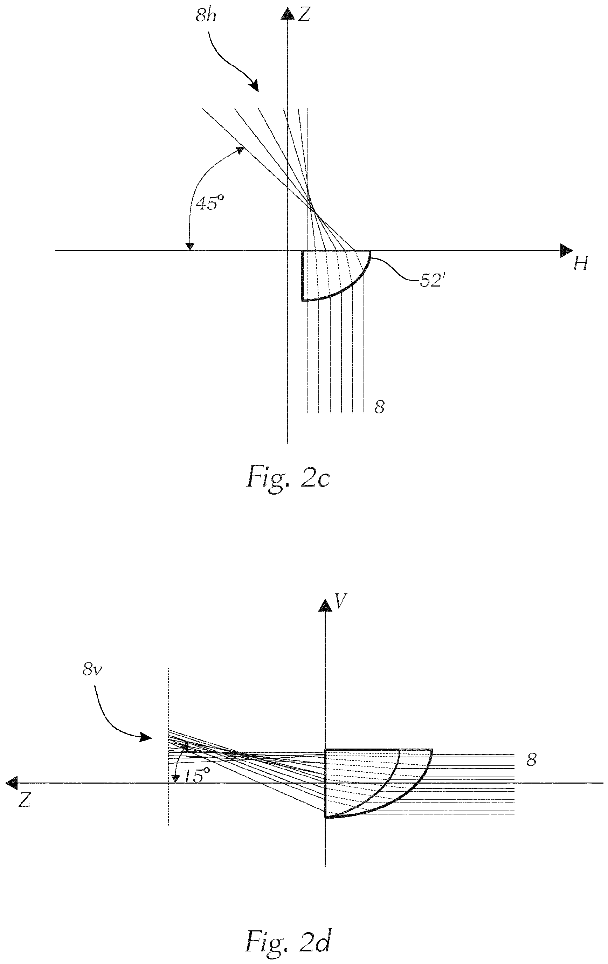

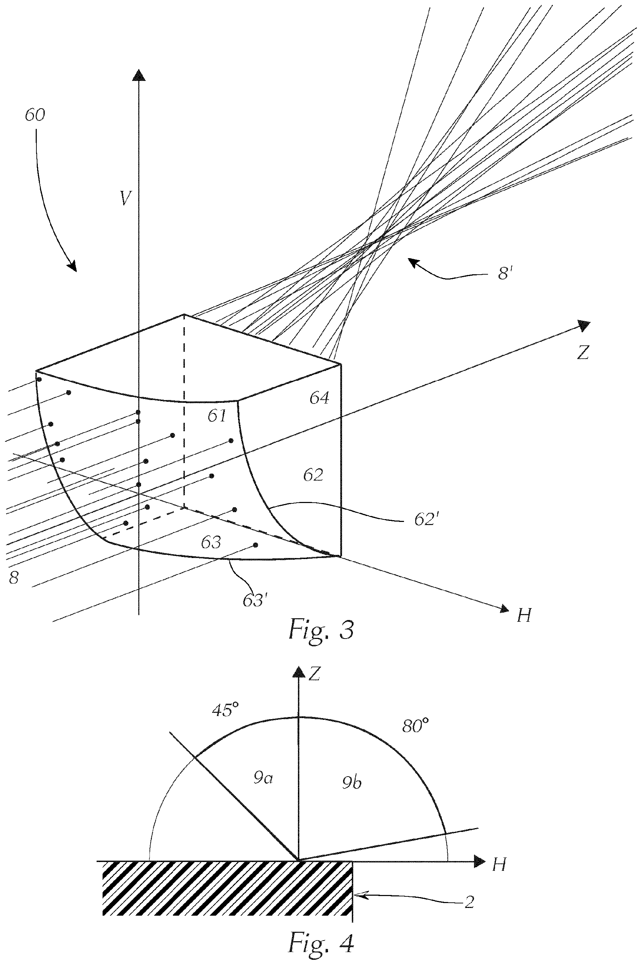

Eine Umlenkung des Lichts in einer weiteren Raumebene, beispielsweise in einer Vertikalebene, kann mithilfe von Strukturelementen erzielt werden, die eine Erhebung aufweisen, deren vertikaler Schnitt eine endliche Krümmung aufweist. Beispiele von solchen Erhebungen sind z.B. in Fig. 2d und Fig. 3 zu sehen, welche Figuren unter anderem die Umlenkung des Lichts darstellen. Der Verlauf der in beispielsweise vertikaler Richtung gekrümmten Erhebung hängt mit dem Grad und der Art der Umlenkung (stark, schwach, um wieviel Grad maximal umgelenkt, wieviel aufgeweitet etc.) zusammen.

Hinsichtlich der Minimierung der Lichtverluste durch die optische Struktur kann es zweckmäßig sein, wenn jedes Strukturelement derart ausgebildet ist, dass das im Wesentlichen gesamte in das Strukturelement durch die gekrümmte Fläche eintretende Licht aus dem Strukturelement durch die der gekrümmten Fläche gegenüberliegende im Wesentlichen plane Fläche austritt.

Um Entstehung von Zusatzkosten durch Verwendung von kostenintensiven Fräsköpfen, beispielsweise diamantbestückten Fräsköpfen, zu vermeiden, kann er zweckdienlich sein, wenn jedes Strukturelement eine charakteristische Länge von 100 Mikrometer aufweist.

Die oben genannte Aufgabe ist außerdem mit einem Kraftfahrzeugscheinwerfer erfindungsgemäß dadurch gelöst, dass die optische Struktur an zumindest einem Teil einer Innenseitenoberfläche einer Abschlussscheibe des Kraftfahrzeugscheinwerfers einem Fahrtrichtungsanzeiger und/oder einem Positionslicht-Modul vorgelagert ist und die Lichtverteilung als eine Signallicht-Lichtverteilung ausgebildet ist.

Die Erfindung samt weiteren Vorteilen ist im Folgenden anhand beispelhafter Ausführungsformen näher erläutert, die in der Zeichnung veranschaulicht sind. In dieser zeigt

Fig. 1 eine erfindungsgemäße Kraftfahrzeugbeleuchtungsvorrichtung, welche in einen Kraftfahrzeugscheinwerfer eingebaut ist;

Fig. 2 einen Ausschnitt einer eine optische Struktur aufweisenden Abschlussscheibe eines Kraftfahrzeugscheinwerfers in perspektivischer Ansicht;

Fig. 2a eine vergrößerte perspektivische Ansicht eines tetraederförmigen Strukturelements;

Fig. 2b einen horizontalen Schnitt des Strukturelements der Fig. 2a;

Fig. 2c vertikalen Schnitt einer Lichtstreuung an dem Strukturelement der Fig. 2a;

Fig. 2d horizontalen Schnitt einer Lichtstreuung an dem Strukturelement der Fig. 2a;

Fig. 3 eine vergrößerte perspektivische Ansicht eines hexaederförmigen Strukturelements;

Fig. 4 einen durch die ECE-Regelung R6 geforderten horizontalen Abstrahlkegel;

Fig. 5 eine vergrößerte Draufsicht eines Ausschnitts einer schräg zu einer Hauptabstrahlrichtung der Kraftfahrzeugbeleuchtungsvorrichtung angeordneten und eine optische Struktur aufweisenden Abschlussscheibe;

Fig. 6, 6a und 6b Anordnungen der geraden Flächen der Strukturelemente hinsichtlich einer Hauptabstrahlrichtung, und

Fig. 7 ein Ausschnitt einer optischen Struktur mit jeweils zwei dicht nebeneinander Angeordneten Strukturelementen.

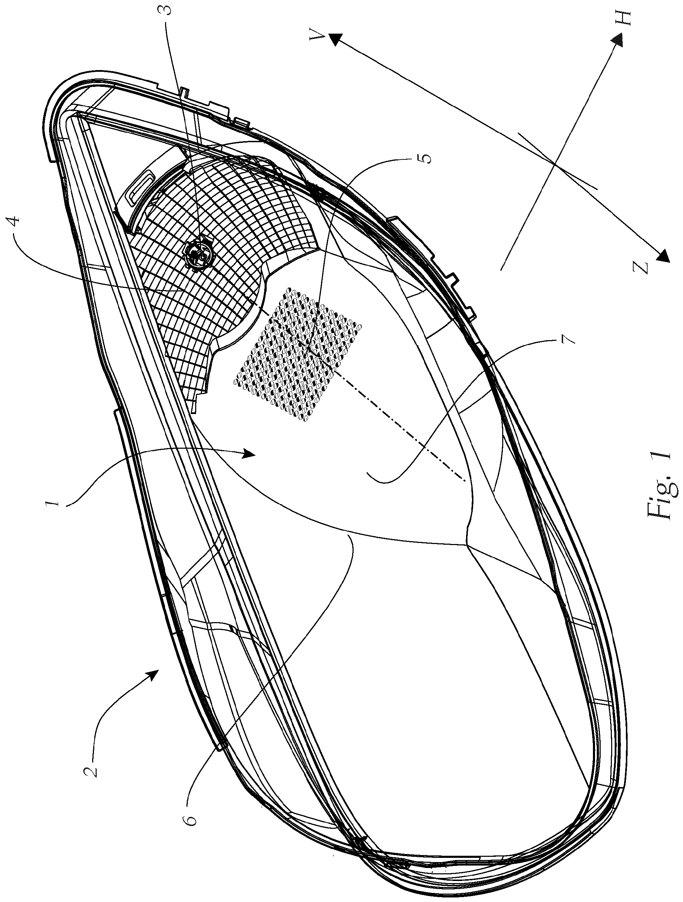

Zunächst wird auf Fig. 1 Bezug genommen. Fig. 1 zeigt schematisch eine erfindungsgemäße Kraftfahrzeugbeleuchtungsvorrichtung 1, welche in einen Kraftfahrzeugscheinwerfer 2 eingebaut ist, wobei der Kraftfahrzeugscheinwerfer mehrere Beleuchtungsvorrichtungen, wie Fig. 1 zeigt, umfassen kann. Die gezeigte Kraftfahrzeugbeleuchtungsvorrichtung 1 weist eine Lichtquelle 3 und ein aus einem einzigen Reflektor 4 bestehendes Lichtabbildungssystem auf. Dabei kann eine Kraftfahrzeugbeleuchtungsvorrichtung 2 noch weitere optisch relevante, hier aber nicht gezeigte, Lichtabbildungselemente, wie z.B. Blenden und/oder Prismen und/oder Linsen und/oder TIR-Optiken und/oder Spiegel (insbesondere Mikrospiegel, Mikrospiegelarrays wie z.B. steuerbare DMD- bzw. DLP-Chips) und/oder Lichtleiter usw. aufweisen. Als eine Lichtquelle 3 kann z.B. eine einfache Glühlampe, eine (meistens an einer Platine angebrachte, die bspw. an einem Kühlkörper befestigt sein kann) Anordnung LED-Lichtquellen, OLED-Lichtquellen oder auch eine Laserlichtquelle fungieren. Reflektoren können ebenfalls unterschiedlich ausgebildet sein. So z.B. kann es sich um einen Freiformreflektor handeln. Dabei erzeugt die Kraftfahrzeugbeleuchtungsvorrichtung 1 ein Lichtbündel, das sich (bei einer eingeschalteten Lichtquelle) in die Hauptabstrahlrichtung Z der Kraftfahrzeugbeleuchtungsvorrichtung 1 ausbreiten, wobei zumindest ein Teil der Lichtstrahlen, vorzugsweise alle Lichtstrahlen, durch eine optische Struktur 5 gestreut wird, bevor die Lichtstrahlen aus dem Kraftfahrzeugscheinwerfer 2 austreten und vor den Kraftfahrzeugscheinwerfer 2 geraten. Dabei kann es vorgesehen sein, dass z.B. mithilfe des Reflektors die meisten vorgeschriebenen Lichtwerte der (unmodifizierten) Lichtverteilung bereits erreicht werden und die optische Struktur für eine zielgerichtete Beleuchtung von Punkten der Lichtverteilung verwendet wird, bei welchen Punkten die Lichtwerte nur mithilfe des Reflektors und ohne die optische Struktur nicht erreicht werden können. Dies kann z.B. bei Punkten auftreten, aus denen der Reflektor nicht "sichtbar" ist, d.h. bei den Punkten, die außerhalb des mit dem Reflektor erzeugten Lichtkegels liegen. Bei der in Fig. 1 gezeigten bevorzugten Ausführungsform der Erfindung ist die optische Struktur 5 zwischen dem Reflektor 4 und einer Abschlussscheibe 6 des Kraftfahrzeugscheinwerfers 2 angeordnet und einer Kraftfahrzeugbeleuchtungsvorrichtung 2 vorgelagert, welche Kraftfahrzeugbeleuchtungsvorrichtung als ein Fahrtrichtungsanzeiger (in die Hauptabstrahlrichtung Z) ausgebildet ist.

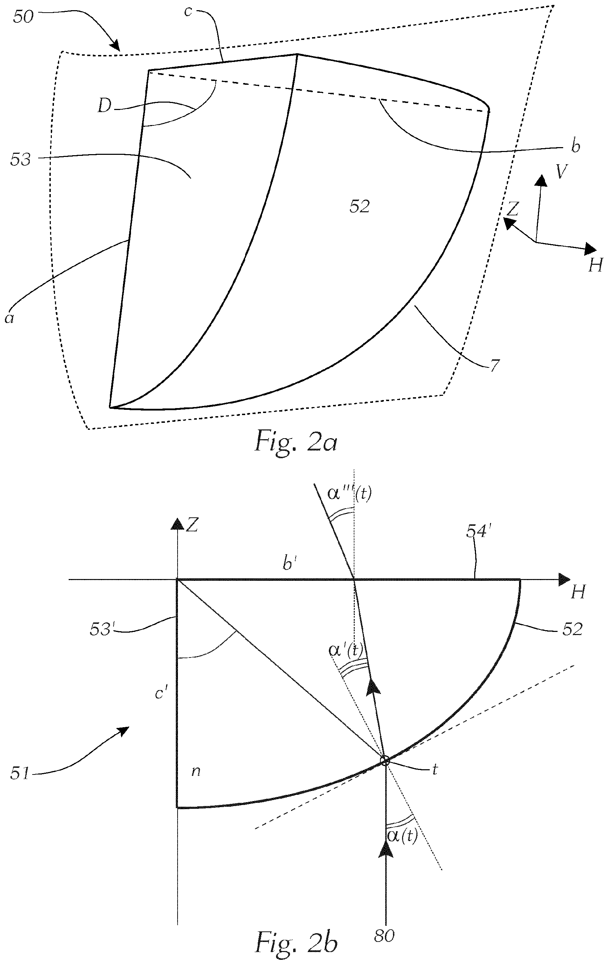

Bei einer weiteren bevorzugten Ausführungsform der vorliegenden Erfindung ist die optische Struktur 5 an einer Innenseitenoberfläche 7 der Abschlussscheibe 6 angeordnet. Fig. 2 stellt einen Ausschnitt der Abschlussscheibe 7 in perspektivischer Ansicht dar. Wie in der Fig. 2 zu sehen ist, weist die optische Struktur 5 eine Mehrzahl optischer lichtstreuender Strukturelemente 50 auf, wobei jedes Strukturelement eine Erhebung 51 aufweist. Die Strukturelemente 50 können dabei periodisch, beispielsweise auf einem gedachten viereckigen Gitter 70, angeordnet sein, wobei es natürlich andere gedachte Gitter, wie bspw. hexagonale, dreieckige usw. zur periodischen Anordnung der Strukturelemente 50 benutzt werden können. Jedes Strukturelement 50 weist eine Erhebung 51 auf, die bei der in Fig. 2 dargestellten Ausführungsform als ein Tetraeder mit einer gekrümmten, nach Außen von dem Tetraeder aus gesehen gewölbten Fläche 52 ausgebildet ist. Bei weiteren unten angeführten Ausführungsformen der Erfindung können die Strukturelemente als andere konvexe Polyeder, beispielsweise als Hexaeder (siehe Fig. 3), ausgebildet sein. Fig. 2a zeigt eine vergrößerte perspektivische Ansicht eines tetraederförmigen Strukturelements 50. Die gekrümmte Fläche 52 des Tetraeders kann dabei beispielsweise ellipsoidflächenförmig ausgebildet sein, wobei drei geraden Kanten a, b und c des Tetraeders Halbachsen des Ellipsoids entsprechen können.

Unter dem Begriff Ellipsoid wird in Zusammenhang mit der vorliegenden Erfindung eine Punktmenge verstanden, die die folgende Gleichung erfüllt

$$\frac{x^2}{a^2} + \frac{y^2}{b^2} + \frac{z^2}{c^2} = 1.$$

Dabei können zwei von drei Halbachsen des Ellipsoids oder alle Halbachsen des Ellipsoids gleich sein, wobei es sich im letzten Fall um einen Sphärenabschnitt (Kugelabschnitt) handelt. Die der gekrümmten Fläche 52 gegenüberliegende von den Tetraederkanten a und b (c kann bei dieser Ausführungsform der Höhe eines Strukturelementes entsprechen) begrenzte im Wesentlichen plane Fläche 53 ist an der Innenseitenoberfläche 7 der Abschlussscheibe 6 angeordnet.

Die gekrümmte Fläche 52 ist der dem von der Kraftfahrzeugbeleuchtungsvorrichtung 1 erzeugten Lichtstrom 8 zugewandt und lenkt das auf sie einfallende Licht von der Hauptabstrahlrichtung Z, d.h. der Richtung der Ausbreitung des von der Kraftfahrzeugbeleuchtungsvorrichtung 1 erzeugten Lichtstroms, ab. Die restlichen zwei Flächen des Tetraeders (die restlichen zwei Facetten) bilden einen Dieder (Zweiflächner), dessen gemeinsame Kante im Wesentlichen parallel zur Hauptabstrahlrichtung Z ausgerichtet ist, die aber auch geneigt zur Hauptabstrahlrichtung Z sein kann, um bspw. unerwünschtes Übersprechen (durch Vermeiden des Lichtaustritts aus dem Strukturelement mittels Totalreflexion) zwischen den Strukturelementen zu vermeiden, oder die Größe der gekrümmten Fläche 52 zu ändern. Der Diederwinkel D, d.h. der Winkel zwischen zwei Facetten des Dieders, beträgt in diesem Ausführungsbeispiel im Wesentlichen 90°, wobei es durchaus vorstellbar ist, dass ein anderer Winkel von Vorteil sein kann, wenn bspw. die Strukturelemente nicht rechteckgittermäßig sondern hexagonalgittermäßig oder dreieckgittermäßig angeordnet sind.

Die Richtung bzw. Richtungen, in welche das Licht von jeweiligen Strukturelementen umgelenkt (gestreut) wird, kann von der Orientierung des Strukturelements 50, insbesondere von der Orientierung der gekrümmten Fläche 52, von dem Abstand zwischen den Strukturelementen und von der Ausrichtung der gemeinsamen Kante des Dieders abhängen.

Um den Winkelbereich bestimmen zu können, in den jedes einzelne Strukturelement 50 das einfallende Licht streut, ist es vorteilhaft, den Verlauf der gekrümmten Fläche zu wissen. Wie oben erwähnt zeigt Fig. 2a ein vergrößertes tetraederförmiges Strukturelement 50, bei welchem die gekrümmte 52 Fläche ist als Ellipsoidausschnitt ausgebildet ist. Ein horizontaler Schnitt des Strukturelements 50 (Fig. 2b) stellt einen Ellipsensektor dar, dessen Länge und Krümmung den oben genannten Winkelbereich der Streuung in horizontaler Richtung vorgibt. Dabei ist die Ausrichtung der im Wesentlichen planen Fläche 53 hinsichtlich der Hauptabstrahlrichtung Z ein weiterer Parameter, der den Winkelbereich beeinflusst. Ein vertikaler Schnitt (nicht dargestellt) des Strukturelements 50 stellt einen weiteren Ellipsensektor dar, dessen Länge und Krümmung die Lichtstreuung in einen Winkelbereich in einer vertikal angeordneten Ebene (vertikaler Richtung) beeinflusst. Das von jedem Strukturelement 50 gestreute Licht ist als ein beispielsweise konvergierendes Lichtbündel ausgebildet. Wenn die gekrümmte Fläche 52 plan ausgebildet wäre, so würde die Etendue des auf das Strukturelement einfallenden Lichtbündels nicht geändert, d.h. das Lichtbündel würde von dem Strukturelement umgelenkt, ohne dass seine Ausdehnungseigenschaften, Konvergenz oder Divergenz beeinflusst wären.

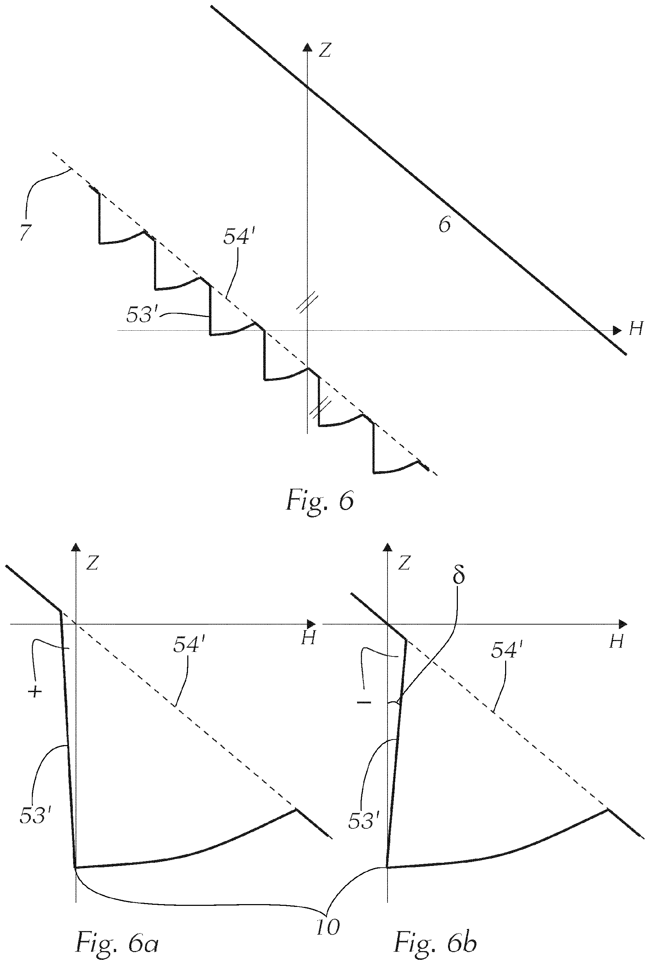

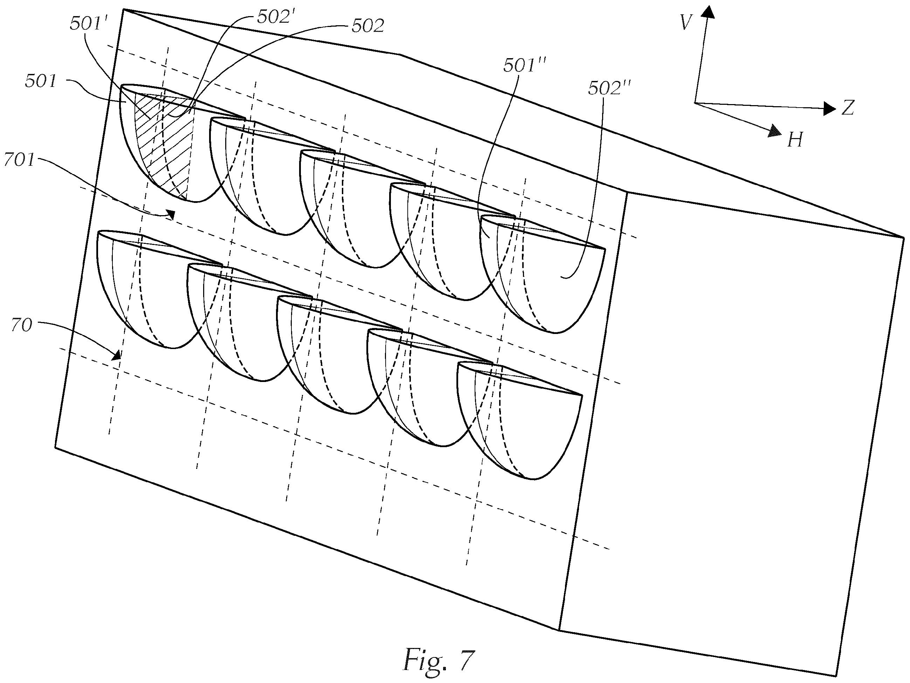

In Fig. 2b ist ein horizontaler Schnitt des tetraederförmigen Strukturelements 50 dargestellt, wobei zwei gerade Kanten 53', 54' einen im Wesentlichen rechten Winkel einschließen und jeweils parallel zu der Hauptabstrahlrichtung Z und zu der Horizontalen H angeordnet sind. Eine andere Anordnung der geraden Kanten ist durchaus vorstellbar (siehe z.B. Fig. 6, 6a, 6b und 7) und kann vorteilhaft sein, wenn die optische Struktur 5 schräg hinsichtlich der Hauptabstrahlrichtung Z angeordnet ist. Fig. 2b veranschaulicht allgemeine Idee der Lichtbrechung an einem erfindungsgemäßen Strukturelement 50. Dabei ist der Schnitt des Strukturelements als eine Ellipse mit zwei Halbachsen c' und b' ausgebildet. Der ellipsenförmige Verlauf des Schnitts der gekrümmten, vorzugsweise ellipsoidförmigen, Fläche hat zum Vorteil, dass der Brechungswinkel $\alpha'(t)$ des in das Strukturelement eindringenden Lichtstrahls 80 von dem Punkt t abhängt, an dem der Lichtstrahl 80 auf das Strukturelement trifft. Bewegt man nun gedanklich den Lichtstrahl 80 nach links oder nach rechts (in horizontaler Richtung) so verändert sich der Brechungswinkel $\alpha'(t)$ und zwar, gemäß dem beispielsweise ellipsenförmigen Verlauf des Schnitts der gekrümmten Fläche, monoton. Durch diese monotone Abhängigkeit des Brechungswinkels $\alpha'(t)$ vom Einfallspunkt t des Lichtstrahls 8, wie es in Fig. 2b dargestellt ist, bildet sich beim Austritt durch die mit der Halbachse b' begrenzten Seite (Kante) 54' ein (zumindest horizontal) konvergierendes Strahlenbündel 8h, wobei der maximale Ablenkwinkel ca. 45° beträgt. Das horizontal konvergierende Strahlenbündel 8h ist in Fig. 2c dargestellt. Je nach Form der gekrümmten Fläche 52', wobei in Figur 2c ein horizontaler Schnitt eines beispielhaften Strukturelements und ergo ein Schnitt der gekrümmten Fläche 52' dargestellt ist, kann das Strahlenbündel 8h als ein divergierendes Strahlenbündel ausgebildet sein. Fig. 2d zeigt ein vertikal konvergierendes Strahlenbündel 8v. Eine vertikale Konvergenz beziehungsweise Divergenz des aus dem Strukturelement 50 austretenden Strahlenbündels kann dann zustande kommen wenn die gekrümmte Fläche des Strukturelements in vertikaler Richtung V gekrümmt ist.

Bei der in Fig. 3 gezeigten bevorzugten Ausführungsform, ist das Strukturelement 60 als ein Hexaeder mit einer gekrümmten, beispielsweise ellipsoidförmigen, Facette (Fläche) 61 ausgebildet. Solches Strukturelement 60 kann beispielsweise durch Extrudieren des tetraederförmigen Strukturelementes 50 erzielt werden. Dabei ist die Facette derart ausgebildet, dass der Hexaeder 60 konvex ist und zwei dreieckigen (wobei jedes Dreieck eine gekrümmte Seite 62', 63' aufweist) planen Facetten 62, 63 aufweist. Die planen (insgesamt fünf) Facetten sind im Wesentlichen entweder vertikal oder horizontal angeordnet. Der gekrümmten Facette gegenüberliegende im Wesentlichen plane Facette 64 kann beispielsweise senkrecht zur Hauptabstrahlrichtung Z und an der hier nicht gezeigten Innenseitenoberfläche der Abschlussscheibe eines Kraftfahrzeugscheinwerfers angeordnet sein. Dabei tritt das im Wesentlichen gesamte durch die gekrümmte Facette 61 eingedrungene Licht durch diese im Wesentlichen plane Facette 64 wieder aus. Die gekrümmte Facette 61 ist derart ausgebildet, dass sie das einfallende Licht in Form von einem sowohl vertikal als auch horizontal konvergierenden Lichtbündel 8' streut. Es ist aber auch denkbar, dass die gekrümmte Facette 61 derart ausgebildet sein kann, dass das Lichtbündel 8' vertikal und horizontal divergiert oder vertikal konvergiert und horizontal divergiert oder vertikal divergiert und horizontal konvergiert. Darüber hinaus kann es vorteilhaft sein, wenn die gekrümmte Facette 61 dergestalt ausgebildet ist, dass das einfallende Lichtbündel 8 in vertikaler Richtung nicht abgelenkt wird. Dies ist möglich, wenn beispielsweise die gekrümmte Facette 61 als ein Zylinderoberflächenausschnitt eines bspw. geraden elliptischen, Zylinders ausgebildet ist, wobei die Achse des Zylinders vertikal angeordnet ist.

Es soll an dieser Stelle angemerkt sein, dass die gekrümmte Facette 61 des Hexaeders 60 oder des oben beschriebenen Tetraeders 50 oder eines als ein Polyeder ausgebildeten Strukturelements derart ausgebildet sein kann, dass das Strukturelement das einfallende Licht nach links und/oder nach rechts von der Hauptabstrahlrichtung umlenken kann.

Darüber hinaus ist es denkbar, dass die gekrümmte Facette des Tetra-, Penta-, Hexa- oder im Allgemeinen des Polyeders einem anderen Verlauf als dem Verlauf eines Ellipsoids folgt. Die gekrümmte Facette kann bspw. dem Verlauf einer Exponentialfunktion folgen. Vorteilhaft ist vor allem, dass die gekrümmte Facette im Wesentlichen in allen ihren Punkten die gleiche Krümmungsrichtung aufweist.

Anschließend soll hier hervorgehoben werden, dass der Begriff Ellipsoid auch ein Rotationsellipsoid und eine Sphäre (eine Kugeloberfläche) miteinschließt. So ist es z.B. vorstellbar dass Strukturelemente als Kugelsegmente oder Kugelsegmentausschnitte ausgebildet sind.

Fig. 4 zeigt den durch die ECE-Regelung R6 geforderten horizontalen Abstrahlkegel 9 eines Fahrtrichtungsanzeigers 2 in einer Draufsicht. Dabei geht es um einen an einer rechten Seite eines vorderen Bereichs eines Fahrzeuges montierten Fahrtrichtungsanzeiger. Der Einfachheit der Darstellung halber ist die Hauptabstrahlrichtung Z koinzident mit der Fahrzeuglängsachse dargestellt. Die ECE-Regelung R6 schreibt vor, dass der Abstrahlkegel nach links (fahrzeuginnenseitig) bis zu 45° und nach rechts (fahrzeugaußenseitig) bis zu 80° erstreckt sein soll. Bei einem an einer linken Seite eines vorderen Bereichs eines Fahrzeuges montierten Fahrtrichtungsanzeiger wird der Abstrahlkegel hinsichtlich der Fahrzeuglängsachse gespiegelt werden.

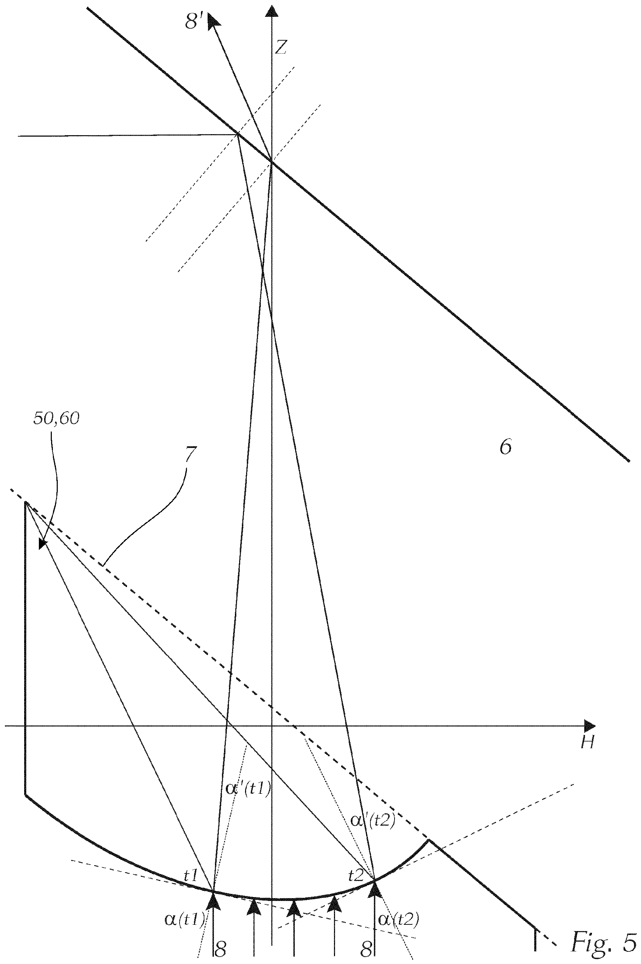

Fig. 5 zeigt eine vergrößerte Draufsicht eines Ausschnitts der Abschlussscheibe 6, welche Abschlussscheibe 6 schräg (nicht orthogonal, beispielsweise um 40° geneigt) zu der Hauptabstrahlrichtung Z (der Ausbreitungsrichtung des Lichtbündels 8) der Kraftfahrzeugbeleuchtungsvorrichtung 1 steht. An der Innenseitenoberfläche 7 der dargestellten Abschlussscheibenausschnitts ist ein Strukturelement 50, 60 angeordnet, dessen gekrümmte Fläche dem Lichtbündel zugewandt ist und gegen die Abstrahlrichtung gewölbt ist. Die im Wesentlichen plane an der Innenseitenoberfläche 7 angeordnete Fläche des Strukturelements ist ebenfalls schräg zu der Hauptabstrahlrichtung angeordnet.

Die Größe des Strukturelements 50, 60 und die Krümmung seiner gekrümmten Fläche sind an die Schräglage der Abschlussscheibe derart angepasst, das nicht das gesamte auf das Strukturelement 50, 60 einfallende Licht 8 aus der Abschlussscheibe austritt. Der an dem Punkt t2 in das Strukturelement 50, 60 eintretende Lichtstrahl tritt aus der Abschlussscheibe aufgrund einer Totalreflexion an der Abschlussscheibenaußenoberfläche nicht aus. Dadurch kann man bei beliebigen Schräglagen der Abschlussscheibe und beliebigen Pfeilungen, d.h. der Position der Lichtquelle bezüglich der Kraftfahrzeugkarosserieteilen, des Kraftfahrzeugscheinwerfers im in ein Kraftfahrzeug eingebauten Zustand einen vorgegebenen Abstrahlkegel der Kraftfahrzeugbeleuchtungsvorrichtung 1 erreichen.

Figuren 6, 6a und 6b zeigen weitere bevorzugte Ausführungsformen der Strukturelemente. Die geraden Kanten 53', 54' schließen dabei keinen rechten Winkel ein. Dabei ist die nicht an der optischen Struktur 5 angeordnete und an einem Eckpunkt 10 mit der gekrümmten Seite zusammenfallende Kante 53' im Wesentlichen parallel zu der Hauptabstrahlrichtung Z angeordnet (Fig. 6). Es kann allerdings vorteilhaft sein, dass der Verlauf der nicht an der optischen Struktur 5 angeordneten Kante 53' von der eben erwähnten Parallelität abweicht. Besonders vorteilhaft ist es, wenn die nicht an der optischen Struktur angeordnete Kante 53' derart angeordnet ist, dass sie einen kleinen (etwa 0° bis 10°, vorzugsweise 2° bis 4°) von der Hauptabstrahlrichtung Z aus gesehen positiven Schräglagewinkel δ mit der Hauptabstrahlrichtung Z bildet (Fig. 6b). Der Vorteil dieser Ausführungsform liegt darin, dass das auf die optische Struktur einfallende Licht auf die dergestalt angeordnete gerade Kante 53' nicht trifft und auch nicht reflektiert wird, was zur Minderung der Lichtstreuung in unerwünschte Richtungen beziehungsweise der Menge an Fehllicht führt.

Bei einer besonders günstigen in Fig. 7 gezeigten Ausführungsform können jeweils zwei Strukturelemente 501, 502 pro eine Grundfläche 701 eines rechteckiges Gitters 70 angeordnet sein. Dabei wie bereits oben erwähnt kann das Gitter 70 beispielsweise hexagonal oder dreieckig ausgebildet sein. Die Strukturelemente 501, 502 sind derart angeordnet, dass eine plane (flach ausgebildete) Facette 501' eines ersten Strukturelements 501 kongruent zu einer planen Facette 502' eines zweiten an derselben Grundfläche 701 angeordneten Strukturelements 502 angeordnet und mit der planen Facette 501' des ersten Strukturelements 501 zusammenführbar ist. Bei der in Fig. 7 gezeigten Ausführungsform sind die ersten Strukturelemente 501 mit den zweiten Strukturelementen 502 derart zusammengeführt, dass die plane Facette 501' jeden ersten Strukturelements 501 an der planen Facette 502' des mit dem ersten Strukturelement 501 zusammengeführten zweiten Strukturelements 502 angeordnet und sie im Wesentlichen vollständig bedeckt. Dabei können die ersten Strukturelemente 501 und die zweiten Strukturelemente 502 in der vertikalen Richtung V und /oder in der horizontalen Richtung H zueinander verschoben sein. Besonders vorteilhaft kann es sein, wenn die gekrümmten Flächen 501", 502" der paarweise angeordneten Strukturelemente voneinander abgewandt aber in die gleiche Richtung gekrümmt sind. Dadurch wird ein Effekt erreicht, dass jedes Paar der Strukturelemente 501, 502 das auf die optische Struktur einfallende Strahlenbündel (Lichtbündel) nach links und nach rechts von der Strahleinfallachse Z, welche mit der Hauptabstrahlrichtung und/oder Kraftfahrzeuglängsachse zusammenfallen kann, gleichzeitig aufweitet. Die paarweise auf einer Grundfläche 701 angeordneten Strukturelemente können aber auch anders zueinander angeordnet sein. Beispielsweise können die gekrümmten Flächen 501", 502" in unterschiedliche Richtungen gekrümmt sein, sodass die planen Flächen 501', 502' nicht mehr zusammenführbar sind.

Darüber hinaus ist es denkbar, dass eine optische Struktur sowohl die das auf die optische Struktur einfallende Strahlenbündel bezugnehmend auf die Strahleinfallachse Z nach rechts aufweitenden Strukturelemente 501 als auch die das auf die optische Struktur einfallende Strahlenbündel bezugnehmend auf die Strahleinfallachse Z nach links aufweitenden Strukturelemente 502 aufweist. Dabei können diese Strukturelemente unterschiedlich zueinander angeordnet sein, beispielsweise dergestalt, dass der Herstellungsprozess der optischen Struktur verbessert wird.

## Patentansprüche

1. Kraftfahrzeugbeleuchtungsvorrichtung (1) für einen Kraftfahrzeugscheinwerfer (2) umfassend

   - zumindest eine Lichtquelle (3),
   - ein der zumindest einen Lichtquelle (3) zugeordnetes optisches Lichtabbildungssystem (4), welches dazu eingerichtet ist, das von der zumindest einen Lichtquelle (3) erzeugtes Licht in Form einer Lichtverteilung vor die Kraftfahrzeugbeleuchtungsvorrichtung (1) abzubilden, und
   - eine optische Struktur (5), die dazu eingerichtet ist, die Lichtverteilung zu einer modifizierten Lichtverteilung zu modifizieren, und eine Mehrzahl optischer lichtstreuender Strukturelemente (50, 60) aufweist, wobei jedes Strukturelement eine Erhebung (51) aufweist, welche Erhebung (51) das von der zumindest einen Lichtquelle (3) erzeugte und auf die Erhebung (51) mithilfe des zumindest einen Lichtabbildungssystems (4) gelenkte Licht, in zumindest einer Raumebene in zumindest eine Richtung umlenkt, wobei
   - die optische Struktur (5) dem zumindest einen optischen Lichtabbildungssystem (4) in die Hauptabstrahlrichtung (Z) nachgeordnet oder ein Teil des optischen Lichtabbildungssystems (4) ist,

- die Erhebung (51) konvex ausgebildet ist und zumindest eine gekrümmte Fläche (52, 61) und eine der gekrümmten Fläche gegenüberliegende im Wesentlichen plane Fläche (53, 64) aufweist,

- welche gekrümmte Fläche (52, 61) dem von der zumindest einen Lichtquelle erzeugten und auf das Strukturelement (50, 60) mithilfe des zumindest einen Lichtabbildungssystems (4) gelenkten Licht (8, 80) zugewandt ist, und

- die zumindest eine Raumebene eine Horizontalebene ist, und

- die modifizierte Lichtverteilung in der Horizontalebene aufgeweitet ist,

**dadurch gekennzeichnet, dass**

die Strukturelemente derart angeordnet und/oder ausgebildet sind, dass das auf die Strukturelemente einfallende Licht in einer weiteren, vertikal angeordneten Raumebene in alle Richtungen in einem Winkelbereich (8v) von 0° bis 45° nach oben von der Hauptabstrahlrichtung der Kraftfahrzeugbeleuchtungsvorrichtung streut und die modifizierte Lichtverteilung in der vertikalen Raumebene aufgeweitet ist.

2. Kraftfahrzeugbeleuchtungsvorrichtung nach Anspruch 1, **dadurch gekennzeichnet, dass** die gekrümmte Fläche (52, 61) ellipsoidflächenförmig ausgebildet ist.

3. Kraftfahrzeugbeleuchtungsvorrichtung nach Anspruch 1 oder 2, **dadurch gekennzeichnet, dass** die Erhebung (51) konvex polyederförmig ausgebildet ist.

4. Kraftfahrzeugbeleuchtungsvorrichtung nach einem der Ansprüche 1 bis 3, **dadurch gekennzeichnet, dass** die Erhebung konvex tetraederförmig ausgebildet ist und genau eine gekrümmte Fläche (52) aufweist.

5. Kraftfahrzeugbeleuchtungsvorrichtung nach einem der Ansprüche 1 bis 3, **dadurch gekennzeichnet, dass** die Erhebung konvex hexaederförmig, insbesondere würfelförmig, ausgebildet ist und genau eine gekrümmte Fläche (61) aufweist.

6. Kraftfahrzeugbeleuchtungsvorrichtung nach Anspruch 1 oder 2, **dadurch gekennzeichnet, dass** die Erhebung ellipsoidsegmentförmig ausgebildet ist.

7. Kraftfahrzeugbeleuchtungsvorrichtung nach Anspruch 6, **dadurch gekennzeichnet, dass** die Erhebung als eine abgeschnittene ellipsoidsegmentförmige Erhebung ausgebildet ist, wobei die Schnittebene hinsichtlich der planen Fläche geneigt ist.

8. Kraftfahrzeugbeleuchtungsvorrichtung nach einem der Ansprüche 1 bis 7, **dadurch gekennzeichnet, dass** die gekrümmte Fläche der Strukturelemente derart ausgebildet ist, dass jedes Strukturelement das Licht bei einer in ein Kraftfahrzeug eingebauten Kraftfahrzeugbeleuchtungsvorrichtung in alle Richtungen in einem Winkelbereich von 0° bis 80°, insbesondere von 0° bis 45°, fahrzeuginnenseitig (9a) und von 0° bis 80° fahrzeugaußenseitig (9b) von der Hauptabstrahlrichtung (Z) der Kraftfahrzeugbeleuchtungsvorrichtung streut.

9. Kraftfahrzeugbeleuchtungsvorrichtung nach einem der Ansprüche 1 bis 7, **dadurch gekennzeichnet, dass** zumindest ein Teil der Strukturelemente derart angeordnet und/oder ausgebildet ist, dass jedes Strukturelement des zumindest einen Teils das auf dieses Strukturelement einfallende Licht in alle Richtungen in einem Winkelbereich von 0° bis 80° rechts oder links von der Hauptabstrahlrichtung der Kraftfahrzeugbeleuchtungsvorrichtung streut, und zumindest ein weiterer Teil der Strukturelemente derart angeordnet und/oder ausgebildet ist, dass jedes Strukturelement des zumindest einen weiteren Teils das auf dieses Strukturelement einfallende Licht in alle Richtungen in einem Winkelbereich von 0° bis 80°, insbesondere von 0° bis 45°, links oder rechts von der Hauptabstrahlrichtung der Kraftfahrzeugbeleuchtungsvorrichtung streut.

10. Kraftfahrzeugbeleuchtungsvorrichtung nach einem der Ansprüche 1 bis 9, **dadurch gekennzeichnet, dass** die Strukturelemente derart angeordnet und/oder ausgebildet sind, dass das auf die Strukturelemente einfallende Licht in der vertikalen Raumebene in alle Richtungen in einem Winkelbereich (8v) von 0° bis 15°, nach oben von der Hauptabstrahlrichtung der Kraftfahrzeugbeleuchtungsvorrichtung streut.

11. Kraftfahrzeugbeleuchtungsvorrichtung nach einem der Ansprüche 1 bis 10, **dadurch gekennzeichnet, dass** jedes Strukturelement derart ausgebildet ist, dass das im Wesentlichen gesamte in das Strukturelement durch die gekrümmte Fläche eintretende Licht aus dem Strukturelement durch die der gekrümmten Fläche gegenüberliegende im Wesentlichen plane Fläche austritt.

12. Kraftfahrzeugbeleuchtungsvorrichtung nach einem der Ansprüche 1 bis 11, **dadurch gekennzeichnet, dass** jedes Strukturelement eine charakteristische Länge von 100 Mikrometer aufweist.

**13.** Kraftfahrzeugscheinwerfer mit einer Kraftfahrzeugbeleuchtungsvorrichtung nach einem der vorangegangenen Ansprüche.

**14.** Kraftfahrzeugscheinwerfer nach Anspruch 13, **dadurch gekennzeichnet, dass** die optische Struktur an zumindest einem Teil einer Innenseitenoberfläche (7) einer Abschlussscheibe (6) des Kraftfahrzeugscheinwerfers (2) einem Fahrtrichtungsanzeiger und/oder einem Positionslicht-Modulvorgelagert ist und die Lichtverteilung als eine Signallicht-Lichtverteilung ausgebildet ist.

**15.** Kraftfahrzeug mit zumindest einem Kraftfahrzeugscheinwerfer nach Anspruch 13 oder 14.

**Claims**

**1.** Motor vehicle lighting device (1) for a motor vehicle headlamp (2) comprising

- at least one light source (3),
- an optical light imaging system (4) associated with the at least one light source (3) and adapted to image the light generated by the at least one light source (3) in the form of a light distribution in front of the motor vehicle lighting device (1), and
- an optical structure (5) which is configured to modify the light distribution to a modified light distribution and has a plurality of optical light-scattering structural elements (50, 60), each structural element having a projection (51), which projection (51) deflects the light generated by the at least one light source (3) and directed onto the projection (51) with the aid of the at least one light imaging system (4), in at least one spatial plane in at least one direction, wherein
- the optical structure (5) being arranged downstream of the at least one optical light imaging system (4) in the main radiation direction (Z) or being a part of the optical light imaging system (4)
- the projection (51) is convex and has at least one curved surface (52, 61) and a substantially planar surface (53, 64) opposite the curved surface
- which curved surface (52, 61) faces the light (8, 80) generated by the at least one light source and directed onto the structural element (50, 60) by means of the at least one light imaging system (4), and
- the at least one spatial plane is a horizontal plane, and
- the modified light distribution is widened in the horizontal plane

**characterized in that**
the structural elements are arranged and/or designed in such a way that the light incident on the structural elements scatters in a further, vertically arranged spatial plane in all directions in an angular range (8v) of 0° to 45° upwards from the main radiation direction of the motor vehicle lighting device, and the modified light distribution is widened in the vertical spatial plane.

**2.** Motor vehicle lighting device according to claim 1, **characterized in that** the curved surface (52, 61) is ellipsoidal surface-shaped.

**3.** Motor vehicle lighting device according to claim 1 or 2, **characterized in that** the elevation (51) is convexly polyhedron-shaped.

**4.** Motor vehicle lighting device according to any one of claims 1 to 3, **characterized in that** the elevation is convexly tetrahedron-shaped and has precisely one curved surface (52).

**5.** Motor vehicle lighting device according to one of claims 1 to 3, **characterized in that** the elevation is convexly hexahedron-shaped, in particular cube-shaped, and has precisely one curved surface (61).

**6.** Motor vehicle lighting device according to claim 1 or 2, **characterized in that** the elevation is designed in the shape of an ellipsoid segment.

**7.** Motor vehicle lighting device according to claim 6, **characterized in that** the elevation is formed as a truncated ellipsoid segment-shaped elevation, the sectional plane being inclined with respect to the planar surface.

**8.** Motor vehicle lighting device according to any one of claims 1 to 7, **characterized in that** the curved surface of the structural elements is designed in such a way that each structural element scatters the light in all directions in an angular range from 0° to 80°, in particular from 0° to 45°, on the inside (9a) of the vehicle and from 0° to 80° on the outside (9b) of the vehicle, from the main radiation direction (Z) of the motor vehicle lighting device when the lighting device is installed in a motor vehicle.

**9.** Motor vehicle lighting device according to any one of claims 1 to 7, **characterized in that** at least one part of the structural elements is arranged and/or formed in such a way that each structural element of the at least one part scatters the light incident on this structural element in all directions in an angular range of 0° to 80° to the right or left of the main radiation direction of the motor vehicle lighting device, and at least one further part of the structural elements is arranged and/or formed in such a way that each structural element of the at least one further part scatters the light incident on this structural element in all directions in an angular range from 0° to 80°, in particular from 0° to 45°, to the left or right of the main radiation direction of the motor vehicle lighting device.

10. Motor vehicle lighting device according to any one of claims 1 to 9, **characterized in that** the structural elements are arranged and/or formed such that the light incident on the structural elements scatters in the vertical spatial plane in all directions in an angular range (8v) of 0° to 15°, upwardly from the main radiation direction of the motor vehicle lighting device.

11. Motor vehicle lighting device according to any one of claims 1 to 10, **characterized in that** each structural element is formed such that substantially all of the light entering the structural element through the curved surface exits the structural element through the substantially flat surface opposite to the curved surface.

12. Motor vehicle lighting device according to any one of claims 1 to 11, **characterized in that** each structural element has a characteristic length of 100 micrometers.

13. Motor vehicle headlamp comprising a motor vehicle lighting device according to any one of the preceding claims.

14. Motor vehicle headlamp according to claim 13, **characterized in that** the optical structure on at least part of an inner side surface (7) of a cover lens (6) of the motor vehicle headlamp (2) is located upstream of a direction indicator and/or a position light module, and the light distribution is designed as a signal light light distribution.

15. Motor vehicle with at least one motor vehicle headlamp according to claim 13 or 14.

**Revendications**

1. Dispositif d'éclairage de véhicule à moteur (1) pour un phare de véhicule à moteur (2) comprenant

   - au moins une source de lumière (3)
   - un système optique d'imagerie lumineuse (4) associé à la au moins une source lumineuse (3) et adapté pour imager la lumière générée par la au moins une source lumineuse (3) sous la forme d'une distribution lumineuse devant le dispositif d'éclairage de véhicule à moteur (1), et
   - une structure optique (5) qui est configurée pour modifier la distribution de lumière en une distribution de lumière modifiée et a une pluralité d'éléments structurels optiques de diffusion de lumière (50, 60), chaque élément structurel ayant une projection (51), laquelle projection (51) dévie la lumière générée par la au moins une source de lumière (3) et dirigée sur la projection (51) à l'aide du au moins un système d'imagerie de lumière (4) dans au moins un plan spatial dans au moins une direction, dans laquelle

   - la structure optique (5) est disposée en aval de l'au moins un système optique de formation d'images lumineuses (4) dans la direction principale de rayonnement (Z) ou fait partie du système optique de formation d'images lumineuses (4),
   - l'élévation (51) est convexe et présente au moins une surface incurvée (52, 61) et une surface sensiblement plane (53, 64) opposée à la surface incurvée,
   - laquelle surface incurvée (52, 61) fait face à la lumière (8, 80) générée par la au moins une source lumineuse et dirigée sur l'élément structurel (50, 60) au moyen du au moins un système d'imagerie lumineuse (4), et
   - l'au moins un plan spatial est un plan horizontal, et
   - la distribution lumineuse modifiée est élargie dans le plan horizontal,

   **caractérisé en ce que**
   les éléments structurels sont disposés et/ou conçus de telle sorte que la lumière incidente sur les éléments structurels se disperse dans un autre plan spatial disposé verticalement dans toutes les directions dans une plage angulaire (8v) de 0° à 45° vers le haut par rapport à la direction principale de rayonnement du dispositif d'éclairage du véhicule automobile et la répartition modifiée de la lumière est élargie dans le plan spatial vertical.

2. Dispositif d'éclairage de véhicule automobile selon la revendication 1, **caractérisé en ce que** la surface incurvée (52, 61) est de forme ellipsoïdale.

3. Dispositif d'éclairage de véhicule automobile selon la revendication 1 ou 2, **caractérisé en ce que** l'élévation (51) est polyédrique convexe.

4. Dispositif d'éclairage de véhicule automobile selon l'une des revendications 1 à 3, **caractérisé en ce que** l'élévation est tétraédrique convexe et présente précisément une surface courbe (52).

5. Dispositif d'éclairage de véhicule automobile selon l'une des revendications 1 à 3, **caractérisé en ce que** l'élévation est de forme hexaédrique convexe, notamment cubique, et présente précisément une surface courbe (61).

6. Dispositif d'éclairage de véhicule automobile selon la revendication 1 ou 2, **caractérisé en ce que** l'élévation est conçue sous la forme d'un segment d'ellipsoïde.

7. Dispositif d'éclairage de véhicule automobile selon la revendication 6, **caractérisé en ce que** l'élévation est formée comme une élévation en forme de segment ellipsoïdal tronqué, le plan de section étant incliné par rapport à la surface plane.

8. Dispositif d'éclairage de véhicule automobile selon l'une des revendications 1 à 7, **caractérisé en ce que** la surface courbe des éléments structurels est conçue de telle sorte que chaque élément structurel diffuse la lumière dans toutes les directions dans une plage angulaire de 0° à 80°, en particulier de 0° à 45°, à l'intérieur (9a) du véhicule et de 0° à 80° à l'extérieur (9b) du véhicule à partir de la direction de rayonnement principale (Z) du dispositif d'éclairage de véhicule automobile lorsque le dispositif d'éclairage est installé dans un véhicule automobile.

9. Dispositif d'éclairage de véhicule automobile selon l'une quelconque des revendications 1 à 7, **caractérisé en ce qu'**au moins une partie des éléments structurels est disposée et/ou formée de telle sorte que chaque élément structurel de la au moins une partie diffuse la lumière incidente sur cet élément structurel dans toutes les directions dans une plage angulaire de 0° à 80° à droite ou à gauche de la direction de rayonnement principale du dispositif d'éclairage de véhicule automobile, et au moins une autre partie des éléments structurels est disposée et/ou formée de telle sorte que chaque élément structurel de la au moins une autre partie diffuse la lumière incidente sur cet élément structurel dans toutes les directions dans une plage angulaire de 0° à 80°, en particulier de 0° à 45°, à gauche ou à droite de la direction principale de rayonnement du dispositif d'éclairage du véhicule automobile.

10. Dispositif d'éclairage de véhicule automobile selon l'une quelconque des revendications 1 à 9, **caractérisé en ce que** les éléments structurels sont disposés et/ou formés de telle sorte que la lumière incidente sur les éléments structurels se disperse dans le plan spatial vertical dans toutes les directions dans une plage angulaire (8v) de 0° à 15°, vers le haut à partir de la direction principale de rayonnement du dispositif d'éclairage de véhicule automobile.

11. Dispositif d'éclairage de véhicule automobile selon l'une quelconque des revendications 1 à 10, **caractérisé en ce que** chaque élément structurel est formé de telle sorte que sensiblement toute la lumière entrant dans l'élément structurel par la surface courbe sort de l'élément structurel par la surface sensiblement plane opposée à la surface courbe.

12. Dispositif d'éclairage de véhicule automobile selon l'une quelconque des revendications 1 à 11, **caractérisé en ce que** chaque élément structurel présente une longueur caractéristique de 100 microns.

13. Projecteur de véhicule automobile comprenant un dispositif d'éclairage de véhicule automobile selon l'une quelconque des revendications précédentes.

14. Projecteur de véhicule automobile selon la revendication 13, **caractérisé en ce que** la structure optique sur au moins une partie d'une surface latérale intérieure (7) d'une lentille de recouvrement (6) du projecteur de véhicule à moteur (2) est positionnée devant un indicateur de direction et/ou un module de feux de position, et la distribution de la lumière est conçue comme une distribution de lumière de signal.

15. Véhicule à moteur avec au moins un projecteur de véhicule automobile selon la revendication 13 ou 14.

Fig. 1

Fig. 2

Fig. 2a

Fig. 2b

*Fig. 2c*

*Fig. 2d*

60

V

8'

Z

64

61

62

62'

63

63'

8

H

Fig. 3

Z

45°

80°

9a

9b

H

2

Fig. 4

*Fig. 5*

Fig. 6

Fig. 6a

Fig. 6b

*Fig. 7*

EP 3 239 593 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015031924 A1
- WO 2015031925 A1
- DE 102008023551 A1
- DE 3208741 A1
- DE 102010027322 A1
- DE 3005883 A1
- US 3379869 A
- DE 102010027415 A1
- US 4912606 A
- DE 102011050423 A1